# EUROPEAN PATENT APPLICATION

(11) **EP 2 944 624 A1**
(43) Date of publication of application: **18.11.2015**
(21) Application number: 14168253.4
(22) Date of filing: 14.05.2014
(51) Int. Cl.: C04B 35/56, C04B 35/563, C04B 35/58

(54) **MAX phase materials free of the elements Al and Si**

(71) Applicant: Haldor Topsøe A/S, 2800 Kgs. Lyngby (DK)
(72) Inventor: CHRISTIANSEN, Niels, 2820 Gentofte (DK)
(74) Representative: Haldor Topsøe A/S

(57) **Abstract**

MAX phase materials without any content of the elements Al and Si, having the chemical formula Mₙ₊₁AXₙ, where M is a transition metal selected among elements from group Ib up to and including group VIIb plus group VIII of the periodic table, n = 1, 2 or 3, X is C and/or N and/or B and/or O, and A is one or more elements selected from Ga, Ge, As, Cd, In, Sn, Tl and Pb. The materials are suitable for use i.a. in membranes, filters, sensors, electrical contacts, batteries, fuel cell systems such as solid oxide fuel cell (SOFC) systems and electrolysis cell systems such as solid oxide electrolysis cell (SOEC) systems.

## Description

The present invention relates to a group of specific MAX phase materials, said materials potentially having a wide range of possible uses. More specifically, the group of MAX phase materials according to the invention consists of compounds free of the elements Al and Si.

The term "MAX phase" was coined in the late 1990s and applies to a family of more than 60 ternary carbides and nitrides sharing a layered structure. The MAX phase compounds are called so because of their chemical formula Mₙ₊₁AXₙ, where M is an early transition metal, n = 1, 2 or 3, A is an A-group element (specifically the subset of elements 13-16), and X is carbon and/or nitrogen. Most of these phases were discovered in powder form around 1970, but it was not until 1996, when phase-pure Ti₃SiC₂ samples were synthesized and appeared to have an unusual combination of properties, that a renewed interest in them arose. This growing interest results from the unusual, often unique, properties of the MAX phases.

The MAX phases are layered hexagonal crystal structures with two formula units per unit cell for structures with n equal to 1-3. The unit cells consist of M₆X-octahedra with the X-atoms filling the octahedral sites between the M-atoms. The octahedra alternate with layers of pure A-elements located at the centers of trigonal prisms that are slightly larger, and thus more accommodating of the larger A-atoms. When n = 1, the A-layers are separated by two M-layers (M₂AX); when n = 2, they are separated by three M-layers (M₃AX₂), and when n = 3, they are separated by four M-layers (M₄AX₃). MAX phases with more complex stacking sequences, such as M₅AX₄, M₆AX₅ and M₇AX₆, have also been reported (N.J. Lane, M. Naguib, J. Lu, L. Hultman & M.W. Bar-soum, "Structure of a new bulk Ti5Al2C3 MAX phase produced by the topotactic transformation of Ti2AlC", J.Eur.Ceram. Soc. 32(9), 3485-3491 (2012)).

In addition to the "pure" MAX phases that contain one of each of the M, A and X elements, the number of possible solid solutions is quite large. Solid solutions have been processed and characterized with substitution on
- M sites, e.g. (Nb,Zr)₂AlC, (Ti,V)₂AlC, (Ti,Nb)₂AlC, (Ti,Cr)₂AlC, (Ti,Hf)₂InC and (Ti,V)₂SC;
- A sites, e.g. Ti₃(Si,Ge)C₂ and Ti₃(Sn,Al)C₂ and
- X sites, e.g. Ti₂Al(C,N) and Ti₃Al(C,N)₂.

The growing interest in the MAX phases is due to their unusual, often unique, properties. Like their corresponding binary carbides and nitrides (MX), the MAX phases are elastically stiff, good thermal and electrical conductors, resistant to chemical attack and having relatively low thermal expansion coefficients (TECs). Mechanically, however, the MAX phases are very different from the MX compounds. They are relatively soft, and most of them are readily machinable, thermal shock resistant and damage tolerant. Moreover, some of them are fatigue, creep and oxidation resistant. At room temperature they can be compressed to stresses as high as 1 GPa and fully recover on removal of the load, while dissipating approximately 25 percent of the mechanical energy. At higher temperatures, they undergo a brittle-to-plastic transition (BPT), above which they are quite plastic, even in tension.

Since then, MAX phase materials have been described and characterized in a number of publications. The litterature describes investigations of several different MAX phase compositions. For instance, Z.M. Sun (International Materials Reviews, vol 56, no 3, 143-166 (2011)), has listed an overview of MAX phases reported in the literature as having been experimentally synthesized, proposed and/or theoretically predicted. Further, C. Hu, H. Zhang, F. Li, Q. Huang and Y. Bao (Int. Journal of Refractory Metals and Hard Materials, 36, 300-312 (2013)) have published a review of new phases in the MAX family. Even though some of these materials exhibit low measured electrical resistivity when measured at room temperature after synthesis, none of the examples have been tailored for low contact resistivity when exposed to long term oxidation at higher temperatures. In the patent field, WO 2006/057618 A2 discloses a coated product consisting of a metallic substrate and a composite coating in which at least one component is of the MAX phase material type. This document also discloses a method of producing such a coated product by vapour deposition techniques in a continuous roll-to-roll process. The coated products include electric contact materials, wear-resistant contacts, low friction surfaces, interconnects, implants, decorative surfaces or non-sticking surfaces.

US 2008/0081172 A1 describes an abradable seal, especially for use in gas turbine engines, said seal being positioned proximate a rotating element. It includes a substrate having a surface facing the rotating element and a coating positioned on the surface of the substrate. This coating contains a matrix material and a filler material, where the matrix material is a MAX phase material, most preferably Ti₃SiC₂.

Various metal matrix composites based on MAX phase materials are described in US 2010/0055492 A1. In addition to these composites there is also described a process for providing a porous green body comprising a particulate MAX phase material and infiltrating the pores of said green body with a low melting point metal, thereby obtaining a composite material.

US 2010/0090879 A1 relates to a microwave absorber, especially for high temperature applications, which comprises at least one resistive sheet and at least one dielectric layer. What is especially characteristic for this microwave absorber is that the resistive sheet is made of a MAX phase material. It is preferably a MAX phase material from the so-called 312 group, which means that, referring to the above formula Mₙ₊₁AXₙ, it contains three M atoms, one A atom and two X atoms, and n=2. The three known compounds of this group are Ti₃GeC₂, Ti₃AlC₂ and Ti₃SiC₂.

US 2012/0012403 A1 describes a cutting tool comprising a support substrate and a complex ceramic cutting surface laminate formed on the support substrate. This laminate comprises hard shards and a MAX phase material. The cutting tool is particularly useful as drill bits for drilling through geological formations.

CN 102117907 A concerns a material for a solid oxide fuel cell (SOFC) interconnect, said material being a titanium silicium carbide, more specifically a ternary layered Ti₃SiC₂ ceramic. The titanium silicon carbide is a ternary layered Ti₃SiC₂ ceramic, and the modified titanium silicon carbide is modified by solid solution modification, in which an Al solid solution is formed at the Si position, or an Nb solid solution is formed at the Ti position while an Al solid solution is formed at the Si position. Said material has an oxidation resistance and an electrical conductivity in working environment equivalent to those of an alloy interconnect material. The thermal expansion coefficient (TEC) is close to that of the yttria-stabilized zirconia (YSZ) electrolyte, the processability is good, and the thermal stability and the creep resistance are high.

Finally, US 2013/0052438 A1 concerns an extremely hard and strong oriented ceramic containing a MAX phase material, said oriented ceramic having a layered microstructure similar to shell layers of pearl. It is possible to obtain a layered material having a bending strength of greater than 1 GPa and a fracture toughness of 20 MPa/m². Preferred MAX phase materials for this oriented ceramic are Nb₄AlC₃ and Ti₃SiC₂.

Thus, the known MAX phase materials may be well-suited for a number of different fields of use, but not necessarily for SOFC use. This is because of two considerations:

The first one is that MAX phase compounds are based on combinations of transition metal ions, elements from groups IIIa up to and including VIa plus carbon and/or nitrogen.

The most common elements from the groups IIIa to VIa are highly electropositive, which also is a natural condition for the mixed ionic/covalent atomic bonds to occur in the MAX phase materials (i.e. for the MAX phase to be formed). At the same time it is ensured that the MAX phase materials, which are not thermodynamically stable in bulk form, are passivated through the formation of a homogeneous protective oxide layer. Most obvious and effective is the formation of Al₂O₃ or SiO₂, which passivate the MAX phase materials in oxidizing atmospheres. The kinetics for the formation of these two oxides is higher than that for other passivating oxides, and that is the reason why especially alumina and silica forming steels are so stable against corrosion. Such protective oxide layers, which are not electronically conductive, are especially problematic to deal with in solid oxide fuel cell (SOFC) components in which a low contact resistance is to be maintained. Therefore steel types for SOFC use should contain as little Al and Si as possible.

The second one is that MAX phase materials are characterized by a high degree of refractoriness. This property is due to the mixing of ionic and covalent bonds in the materials as well as their structural orbital-dependent orientation, which is also found in e.g. binary carbides and nitrides. As a consequence, these materials are extremely difficult to sinter, and it is therefore necessary to use high temperatures and also protective gases during sintering.

The present invention is based on the fact that known MAX phase materials contain Al or Si on the A site. After exposure to an oxidizing atmosphere for a long time, especially at elevated temperatures, such materials will form oxide layers of Al₂O₃ or SiO₂, either as a surface layer or as an interlayer. Because layers of Al₂O₃ or SiO₂ exhibit very high electrical resistivities in the order of 10¹⁴ ohm·cm, known MAX phase materials are less suitable for applications where good electrical contact properties are important. Substituting Al₂O₃ and SiO₂ with Zn, Ga, Ge, In or Sn will render it possible to tailor a MAX phase material with very low contact resistivity. With these elements on the A site of the MAX phase materials, the transition metal elements on the M site may be selected as the more electronegative element, ensuring formation of oxide layers of the less electronegative A site elements in an oxidative environment. Oxides based on the elements Ga, In, Sn and Ge are known to have resistivities as low as 3 mohm·cm.

In the absence of aluminium and silicon in the MAX phase composition, the material will form layers of protective oxides consisting of the other M and A cations present. It is interesting that candidates such as Ga, In and Sn are forming mixed oxides with an excellent electron conductivity.

The MAX phase materials have very unusual properties. Like their corresponding binary carbides and nitrides (MX), the MAX phases are elastically stiff, good thermal and electrical conductors, resistant to chemical attacks, and they have relatively low TECs. Mechanically, however, they are very different from the binary carbides and nitrides. Thus, they are relatively soft, and most of them are readily machineable, thermal shock resistant and damage tolerant. Moreover, some are fatigue, creep and oxidation resistant. At room temperature they can be compressed to stresses as high as 1 GPa and fully recover on removal of the load, while dissipating approximately 25 percent of the mechanical energy. At higher temperatures they undergo a brittle-to-plastic transition (BPT), above which they are quite plastic, even in tension.

The present invention thus relates to a group of novel specific MAX phase materials free of the elements Al and Si, said materials having the chemical formula

Mₙ₊₁AXₙ

where M is a transition metal selected among elements from group Ib up to and including group VIIb plus group VIII of the periodic table, n = 1, 2 or 3, X is C and/or N and/or B and/or O, and A is one or more elements selected from Ga, Ge, As, Cd, In, Sn, Tl and Pb.

As typical examples these novel MAX phase materials, which exhibit very low electrical contact resistivities, may contain one or more elements selected from Fe, Co, Ni, Cu, Mo and W on the M site and one or more elements selected from Zn, Ga, Ge, In and Sn on the A site.

Preferred MAX phase materials are those wherein:
- M is present in a sub-stoichiometric amount
- A is present in a sub-stoichiometric amount
- X is present in a sub-stoichiometric amount
- M is present in an over-stoichiometric amount
- A is present in an over-stoichiometric amount or
- X is present in an over-stoichiometric amount.

Other preferred embodiments include materials wherein the MAX phase composition is doped with suitable dopant oxides and MAX phase materials which have been reaction sintered by adding at least one of the elements M and A as a metal or a metal salt.

The possible fields of use for the MAX phase materials according to the invention include - but are not necessarily limited to - use in membranes, filters, sensors, electrical contacts, batteries, fuel cell systems such as solid oxide fuel cell (SOFC) systems and electrolysis cell systems such as solid oxide electrolysis cell (SOEC) systems.

## Claims

1. MAX phase material free of the elements Al and Si, said material having the chemical formula
Mₙ₊₁AXₙ
where M is a transition metal selected among elements from group Ib up to and including group VIIb plus group VIII of the periodic table, n = 1, 2 or 3, X is C and/or N and/or B and/or O, and A is one or more elements selected from Ga, Ge, As, Cd, In, Sn, Tl and Pb.

2. MAX phase material according to claim 1, wherein M is one or more elements selected from Fe, Co, Ni, Cu, Mo and W and A is one or more elements selected from Zn, Ga, Ge, In and Sn.

3. MAX phase material according to claim 1 or 2, wherein M is present in a sub-stoichiometric amount.

4. MAX phase material according to claim 1 or 2, wherein A is present in a sub-stoichiometric amount.

5. MAX phase material according to claim 1 or 2, wherein X is present in a sub-stoichiometric amount.

6. MAX phase material according to claim 1 or 2, wherein M is present in an over-stoichiometric amount.

7. MAX phase material according to claim 1 or 2, wherein A is present in an over-stoichiometric amount.

8. MAX phase material according to claim 1 or 2, wherein X is present in an over-stoichiometric amount.

9. MAX phase material according to any of the claims 1-8 wherein the MAX phase composition is doped with suitable dopant oxides.

10. MAX phase material according to any of the claims 1-8 wherein the material has been reaction sintered by adding at least one of the elements M and A as a metal or a metal salt.

11. Use of MAX phase materials according to any of the preceding claims in membranes, filters, sensors, electrical contacts, batteries, fuel cell systems such as solid oxide fuel cell (SOFC) systems and electrolysis cell systems such as solid oxide electrolysis cell (SOEC) systems.
